# EUROPÄISCHE PATENTSCHRIFT

(11) **EP 2 482 237 B1**
(45) Veröffentlichungstag und Bekanntmachung des Hinweises auf die Patenterteilung: **04.09.2013**
(21) Anmeldenummer: 11152196.9
(22) Anmeldetag: 26.01.2011
(51) Int. Cl.: G06K 19/077

(54) **Körper in Form einer Verpackung oder eines Formteils mit einer RFID-Antenne**
Body in the form of a packaging or a moulded part comprising an RFID-Antenna
Corps en forme d'emballage ou de pièce de formage comportant une antenne RFID

(43) Veröffentlichungstag der Anmeldung: 01.08.2012
(73) Patentinhaber: Mondi Consumer Packaging Technologies GmbH, 48599 Gronau (DE)
(72) Erfinder: Dr. Kohla, Michael,, 48329 Havixbeck (DE); Lindenhahn, Franziska, 54294 Trier (DE)
(74) Vertreter: Lorenz, Bernd Ingo Thaddeus

(56) Entgegenhaltungen:
- WO-A2-2005/073937
- DE-A1-102005 042 444

## Beschreibung

Die Erfindung bezieht sich auf einen, Körper in Form einer Verpackung oder eines Formteils gemäß dem Oberbegriff des Anspruchs 1.

RFID-Anordnungen umfassen gemäß ihrem allgemeinen Aufbau eine Antenne und einen üblicherweise direkt mit der Antenne kontaktierten RFID-Chip. RFID-Anordnungen werden ähnlich wie die weit verbreiteten Barcodes zur Produktkennzeichnung eingesetzt, wobei RFID-Anordnungen sich durch eine hohe Sicherheit, eine besonders leichte Auslesbarkeit auszeichnen. Neben der Übermittlung lediglich einer Identifikationsnummer können grundsätzlich auch größere Datensätze hinterlegt und ausgelesen werden. Da RFID-Anordnungen über einen gewissen Abstand ausgelesen werden können und zu dem Lesegerät kein direkter Sichtkontakt bestehen muss, ist eine sehr einfache Handhabung auch unter ungünstigen Bedingungen möglich.

RFID-Anordnungen werden in der Praxis üblicherweise in Form von RFID-Etiketten bereitgestellt, wobei diese Etiketten auf eine Verpackung oder einen sonstigen zu kennzeichnenden Gegenstand aufgeklebt werden. Entsprechende RFID-Etiketten sind aus der EP 1 892 650 B1, der US 6 147 662 sowie der US 2006/0038687 A1 bekannt, wobei durch das Aufkleben eines solchen Etiketts auf den zu kennzeichnenden Gegenstand ein Körper mit den eingangs beschriebenen Merkmalen gebildet wird. Die Kopplung von RFID-Antennen und RFID-Chip erfolgt dabei üblicherweise durch eine direkte elektrisch leitfähige Kontaktierung, wobei die Antenne mit einer elektrisch leitfähigen Druckfarbe auf das Folienmaterial des Etikettes aufgedruckt ist. Neben flexiblen Etikettenfolien ist es auch bekannt, die RFID-Anordnungen auf einem formstabilen Träger aufzubringen, der dann als Ganzes auf den zu kennzeichnenden Gegenstand aufgebracht wird.

Aus der DE 20 2006 008 789 U1 ist ein Kontaktelement zur Verbindung eines RFID-Chips mit einer Antenne bekannt, wobei auf einem Substrat eine elektrisch leitende Struktur und ein mit dieser Struktur verbundener RFID-Chip vorgesehen sind. Davon ausgehend wird vorgeschlagen die elektrisch leitende Struktur kapazitiv an die Antenne anzukoppeln. Die Ausgestaltung und Anordnung der Antenne ist davon ausgehend nicht weiter beschrieben.

Aus der WO 2008/0555878 A1 sind ein selbstklebendes RFID-Etikett sowie ein Verfahren zu seiner Herstellung bekannt, wobei der RFID-Chip elektrisch mit einer Koppelantenne verbunden sein kann, die auf einem Trägermaterial angeordnet ist, wobei eine RFID-Antenne und die Koppelantenne so zueinander positioniert sind, dass sie induktiv gekoppelt sind. Das selbstklebende RFID-Etikett wird in üblicher Weise auf einen zu kennzeichnenden Gegenstand aufgeklebt.

Ein Körper in Form einer Verpackung oder eines Formteils gemäß dem Oberbegriff des Anspruchs 1 ist aus der WO 2005/073937 A2 bekannt. Da optional auch eine rührungslose, d. h., eine kapazitive oder eine induktive Ankopplung möglich ist, kann die RFID-Antenne auch an der Innenseite der Verpackung angeordnet sein. Bei einer solchen Anordnung ist die Antenne gegen Einflüsse von außen geschützt, kann aber bei einer Bewegung der Verpackung unter Umständen von dem verpackten Gegenstand beschädigt werden.

Der Erfindung liegt die Aufgabe zugrunde, die Anbringung einer RFID-Anordnung an einem Körper in Form einer Verpackung oder eines Formteils zuverlässiger zu gestalten.

Zur Lösung dieser Aufgabe ist erfindungsgemäß ein Körper in Form einer Verpackung oder eines Formteils gemäß Patentanspruch 1 vorgesehen.

Die RFID-Antenne ist damit unmittelbarer Bestandteil der Verpackung bzw. des Formteils und muss nicht mit einem entsprechend großen Etikett aufgebracht werden. Lediglich der Trägerabschnitt mit dem RFID-Chip wird getrennt appliziert, wobei der Trägerabschnitt üblicherweise deutlich kleiner als die Antenne ist.

Erfindungsgemäß ist der RFID-Chip berührungslos, das heißt ohne direkten elektrischen Kontakt an die Antenne angekoppelt. Die Ankopplung kann induktiv oder besonders bevorzugt kapazitiv erfolgen. Zur berührungslosen, H vorzugsweise kapazitiven Kopplung ist zur Übertragung zwischen dem RFID-H Chip und der RFID-Antenne ein Anpassnetzwerk vorgesehen. So ist vorgesehen, dass der RFID-Chip an ein auf dem Trägerabschnitt angeordnetes Anpassnetzwerk angeschlossen, heißt üblicherweise direkt kontaktiert ist, wobei der RFID-Chip über das Anpassnetzwerk berührungslos an die Antenne angekoppelt ist.

Bei einer berührungslosen Ankopplung der RFID-Antenne an den RFID-Chip, über das Anpassnetzwerk, ergibt sich der Vorteil, dass die Antenne nicht an der Oberfläche der Folie angeordnet sein muss. So wird erfindungsgemäß eine mehrschichtig laminierte Folie bereitgestellt, bei der die Antenne an einem innen liegenden Schichtübergang der Folie angeordnet ist. Die Antenne ist dann optimal gegen mechanische Beschädigungen geschützt. So ist es auch ohne Weiteres möglich, die Antenne zunächst auf eine Folienbahn zu drucken, wobei insbesondere ein Tiefdruckprozess geeignet ist, bevor dann Abschnitte der Folie zu Teilen einer Verpackung oder eines Formteils verarbeitet werden. Auch im Rahmen einer solchen Verarbeitung die beispielsweise ein Schneiden, Falten und Siegeln umfasst, ist bei einer innen liegenden Anordnung der RFID-Antenne ein sicherer Schutz gewährleistet. Auch bei der späteren Handhabung des Körpers kann die Antenne nicht durch Abrieb oder andere mechanische Einflüsse beschädigt werden, wenn diese innen liegend angeordnet ist. Dabei ist zu berücksichtigen, dass RFID-Antennen häufig feine Leiterbahnstrukturen aufweisen und so in einem gewissen Maße gegenüber Beschädigungen anfällig sind. Wenn beispielsweise eine Leiterbahn durchtrennt wird, geht die übliche Abstrahlcharakteristik verloren, wobei sich üblicherweise auch die Eigenfrequenz völlig ändert.

Im Rahmen der Erfindung ist die Materialzusammenstellung der Folie nicht weiter eingeschränkt. Es muss lediglich gewährleistet sein, dass eine Schicht der Folie eine ausreichende Bedruckbarkeit aufweist. Zur Herstellung von Verpackungen werden häufig Verbundfolien aus Polyethylenterephthalat und Polyethylen (PET/PE-Verbund) eingesetzt. Bei solchen Verbunden erfolgt häufig an dem innen liegenden Schichtübergang ein Dekoraufdruck auf der Schicht aus PET. Der Dekoraufdruck ist dann nach der Laminierung mit zumindest einer weiteren Schicht, insbesondere einer Schicht aus Polyethylen gegen Abrieb geschützt. Die RFID-Antenne kann auch innenseitig in dem gleichen Druckprozess mit einer leitfähigen Farbe aufgebracht werden. Geeignete Druckfarben sind beispielsweise aus der DE 10 2005 007 772 A1 sowie der WO 03/068874 A1 bekannt. Auch im Hinblick auf die Alterungsbeständigkeit der Druckfarbe ist eine Anordnung der RFID-Antenne an einem innen liegenden Schichtübergang der Folie besonders vorteilhaft. So kann beispielsweise ohne Weiteres auch eine silberhaltige Druckfarbe eingesetzt werden, die sich zwar durch sehr gute elektrische Eigenschaften auszeichnet, aber bei einer freiliegenden Anordnung alterungsempfindlich ist. Entsprechend eignet sich die Ausgestaltung des erfindungsgemäßen Körpers mit der Antenne an einem innen liegenden Schichtübergang auch für eine langfristige Lagerung oder Archivierung der zu kennzeichnenden Gegenstände, das heißt der Verpackung bzw. des Formteils.

Ein Körper in Form einer Verpackung kann insbesondere durch Heißsiegeln gebildet werden. Entsprechend weist die Folie gemäß einer bevorzugten Ausgestaltung der Erfindung eine Schicht auf, die heißsiegelbar ist. Als heißsiegelbare Materialien sind Polyolefine, insbesondere PE, geeignet.

Der RFID-Chip wird über das Anpassnetzwerk nach Art eines LC-Schwingkreises an die RDIF-Antenne angekoppelt. Ausgehend von den Anschlüssen für den RFID-Chip kann das Anpassnetzwerk demnach Leiterbahnen und leitende Flächen aufweisen, wobei die Leiterbahnen im Wesentlichen die Funktion einer Spule und die leitenden Flächen die Funktion eines Kondensators aufweisen. Das Anpassnetzwerk (auch Anpassungsnetzwerk) ist zur Anpassung der komplexen Impedanzen von RFID-Chip und RFID-Antenne vorgesehen, so dass Übertragungsverluste minimiert werden. Wenn durch die Anpassung mittels des Anpassnetzwerkes eine Gesamtresonanz erzeugt wird, wird eine maximale Signalbestrahlung bzw. Empfindlichkeit der RFID-Anordnung erreicht. Bei der bevorzugten kapazitiven Kopplung sind zweckmäßigerweise an dem Anpassnetzwerk und der RFID-Antenne einander zugeordnete leitende Flächen vorgesehen, die mit dem dazwischen angeordneten Material einen Kondensator bilden. Neben der Größe und dem Abstand der Flächen muss auch die die Elektrizitätskonstante des dazwischen angeordneten Materials berücksichtigt werden. Bei der Anordnung der RFID-Antenne innerhalb einer mehrschichtigen Folie müssen also die zwischen der RFID-Antenne und dem Anpassnetzwerk vorhandenen Schichten hinsichtlich ihrer Dicke und ihrer Dielektrizität berücksichtigt werden. Im Rahmen der Erfindung ist eine kapazitive Kopplung vorteilhaft, weil dadurch bei einem kompakten Aufbau eine Signalübertragung mit minimierten Übertragungsverlusten möglich ist. Alternativ kann grundsätzlich aber auch eine induktive Kopplung zwischen dem Anpassnetzwerk und der RFID-Antenne vorgesehen sein, wobei dann zur Übertragung einander zugeordnete Leiterbahnen oder Spulenstrukturen von Anpassnetzwerk und RFID-Antenne vorzusehen sind.

Bei der Herstellung der aus dem Stand der Technik bekannten RFID-Etiketten werden auf einer Folienbahn die RFID-Antennen dicht an dicht aufgedruckt, um eine optimale Flächennutzung zu erreichen. Einzelne Etiketten werden dann aus der Folienbahn ausgestanzt. Im Gegensatz dazu ist die RFID-Antenne im Rahmen der Erfindung Bestandteil des gesamten Körpers in Form einer Verpackung oder eines Formteils. Entsprechend deckt die RFID-Antenne auch nur einen vergleichsweise kleinen Bereich der gesamten Folie ab. Typischerweise beträgt die von dem Außenumfang der RFID-Antenne abgedeckte Fläche weniger als 20 %, vorzugsweise weniger als 10 %, besonders bevorzugt weniger als 5 % der Gesamtfläche der Folie.

Im Rahmen der Erfindung wird der Trägerabschnitt mit dem RFID-Chip und vorzugsweise auch dem Anpassnetzwerk separat appliziert. Der Trägerabschnitt kann dabei als Klebeetikett ausgebildet sein, welches nachträglich auf der Verpackung bzw. dem Formteil angeordnet wird. Bei einer berührungslosen, bevorzugt kapazitiven Kopplung über das Anpassnetzwerk ergibt sich auch der Vorteil, dass im Vergleich zu einer direkten Kontaktierung eine deutlich geringe Applikationsgenauigkeit notwendig ist. Zufriedenstellende Ergebnisse werden im Rahmen der Erfindung bei einer kapazitiven Kopplung auch dann erreicht, wenn der RFID-Chip mit dem Anpassnetzwerk gegenüber einer optimalen Ausrichtung um einige Millimeter versetzt ist. Bei einer direkten Kontaktierung ist dagegen üblicherweise eine Genauigkeit von zehntel oder gar hundertstel Millimeter notwendig.

Wenn der erfindungsgemäße Körper die Form einer Verpackung aufweist, kann dieser beispielsweise als Folienverpackungsbeutel ausgebildet sein. Der Folienverpackungsbeutel kann ohne Einschränkung vollständig aus der mit der RFID-Antenne bedruckten Folie durch Falten und Heißsiegeln gebildet sein. Darüber hinaus ist es auch möglich mehrere Folienzuschnitte bereitzustellen und diese dann zu einem Verpackungsbeutel zusammenzufügen, wobei zumindest einer der Folienabschnitte die beschriebene RFID-Anordnung aufweist.

Gemäß einer alternativen Ausgestaltung wird eine Tiefziehverpackung geformt, wobei die mit der RFID-Anordnung versehene Folie entweder eine tiefgezogene Mulde oder einen abziehbaren Deckel bildet. Bei einer tiefgezogenen Mulde kann der Aufdruck der RFID-Antenne auch vor dem Tiefziehen erfolgen, wenn die Antenne von stark umgeformten Bereichen ferngehalten wird. Die RFID-Antenne kann beispielsweise an dem Boden der Mulde angeordnet sein.

Im Rahmen der Erfindung ergibt sich der Vorteil, dass die allgemeine Ausgestaltung der Folie nicht weiter eingeschränkt ist. Bei der Integration der RFID-Antenne in den Deckel einer Tiefziehverpackung kann die den Deckel bildende Folie auch an sich bekannte Barriereschichten zum Aromaschutz und/oder Klebstoffschichten zur Ermöglichung eines Wiederverschlusses aufweisen.

Gemäß einer weiteren alternativen Ausgestaltung der Erfindung bildet die mit der RFID-Anordnung versehene Folie eine Außenlage eines Formkörpers, wobei die Folie mit einem polymeren Material hinterspritzt oder hinterschäumt ist. Es kann sich beispielsweise um ein Teil für ein Kraftfahrzeug handeln.

Ein weiterer Aspekt der vorliegenden Erfindung betrifft die Abstrahlcharakteristik der RFID-Antenne. So weist die RFID-Antenne gemäß einer bevorzugten Ausgestaltung der Erfindung eine Struktur mit zwei sich kreuzenden Dipolanordnungen auf, wobei der RFID-Chip zur Kopplung an die Antenne vier Anschlüsse aufweist. Durch eine geeignete Antennengeometrie mit sich kreuzenden Dipolanordnungen kann ein gleichmäßiges Abstrahlverhalten, insbesondere ein Rundabstrahlverhalten, erreicht werden. Ein in Kombination mit einer solchen RFID-Antenne besonders geeigneter RFID-Chip wird von dem Hersteller Impinj, Inc., Seattle, WA 98103 unter dem Namen Monza® 4 vertrieben.

Gemäß einer besonders bevorzugten Ausgestaltung der Erfindung weist die RFID-Antenne vier gleich ausgebildete Segmente auf, die in einer Winkelteilung von 90° angeordnet sind und sich von einem mittleren Kopplungsbereich nach außen erstrecken, wobei die Segmente jeweils bezüglich einer sich von dem Kopplungsbereich nach außen erstreckenden Segmentlängsachse spiegelsymmetrisch ausgebildet sind und wobei die Segmente jeweils entlang ihrer Segmentlängsachse zumindest eine freie Fläche aufweisen, die rahmenförmig von leitendem Material umgeben ist.

Insbesondere können die Segmente jeweils zumindest zwei aufeinander folgende freie Flächen aufweisen, die rahmenförmig von leitendem Material umgeben sind und zwischen denen eine Einschnürung vorgesehen ist. Eine solche Antennengeometrie mit spiegelsymmetrischen Segmenten ist aus dem Stand der Technik ohne Beispiel, wobei gemäß dem Stand der Technik häufig mäanderförmig verlaufende und damit asymmetrische Strukturen verwirklicht sind. Die beschriebene RFID-Antenne zeichnet sich durch eine besonders gleichmäßige Rundabstrahlcharakteristik aus.

Die Erfindung wird im Folgenden anhand einer lediglich ein Ausführungsbeispiel darstellenden Zeichnung erläutert. Es zeigen schematisch:
- **Fig. 1**: einen Körper in Form eines Folienverpackungsbeutels, der aus einer Folie gebildet ist,
- **Fig. 2**: einen Schnitt durch die den Folienverpackungsbeutel bildenden Folie im Bereich einer RFID-Anordnung,
- **Fig. 3**: die Detailausgestaltung der RFID-Anordnung,
- **Fig. 4**: einen Körper in Form einer Tiefziehverpackung, und
- **Fig. 5**: einen Körper in Form eines Formteils.

Die Erfindung betrifft einen Körper in Form einer Verpackung oder eines Formteils mit einer Außenlage aus einer Folie 1, an der eine RFID-Anordnung 2 vorgesehen ist.

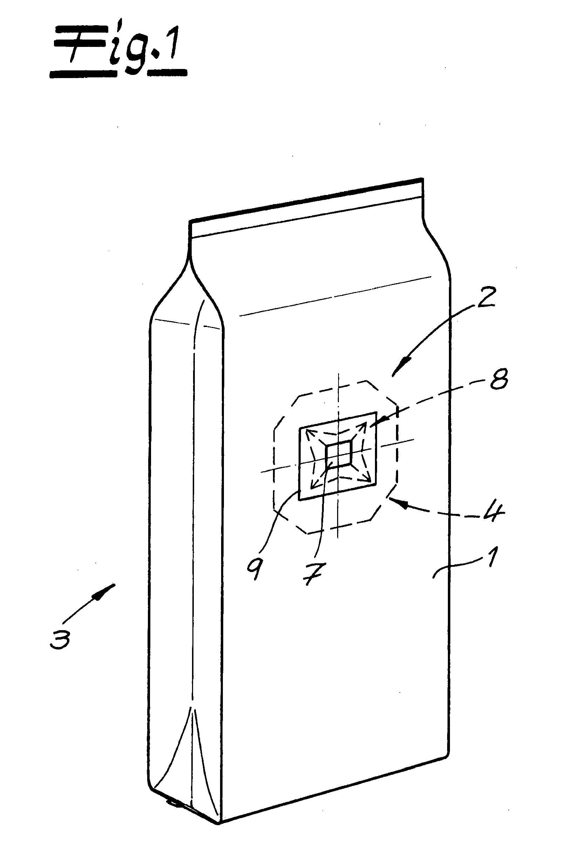

Die Fig. 1 zeigt ein konkretes Ausführungsbeispiel eines Verpackungsbeutels 3, der komplett aus der Folie 1 gebildet ist und an einer Frontfläche die beschriebene RFID-Anordnung 2 aufweist.

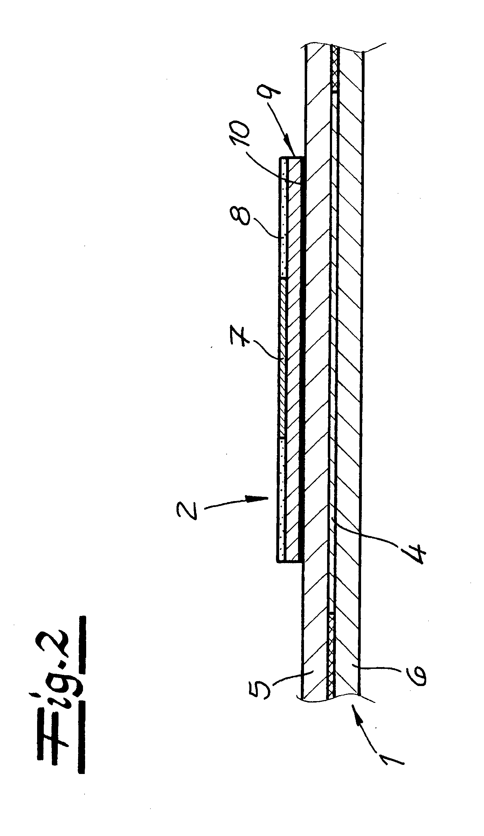

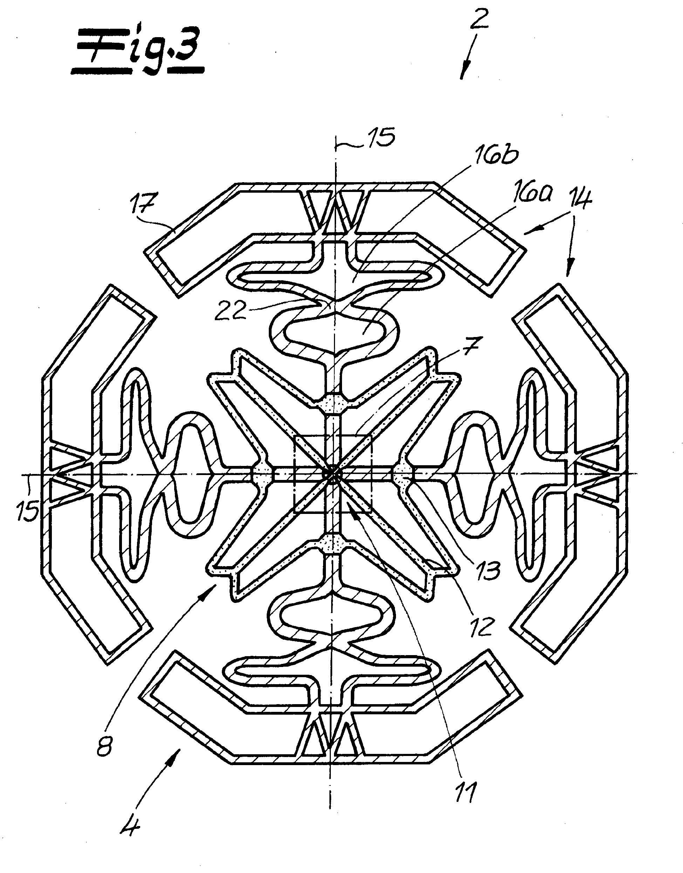

Die weitere Ausgestaltung der RFID-Anordnung 2 ist den Fig. 2 und 3 zu entnehmen. So zeigt die Fig. 2, dass eine Antenne 4 der RFID-Anordnung 2 unmittelbar auf eine Schicht der Folie 1 mit einer leitfähigen Druckfarbe aufgedruckt ist. Die Bedruckung kann insbesondere in einem Tiefdruckverfahren erfolgen, wobei neben der RFID-Antenne 4 auch ein Dekoraufdruck oder eine Beschriftung mit üblicher Druckfarbe aufgebracht werden kann.

Gemäß dem einer bevorzugten Ausgestaltung darstellenden Ausführungsbeispiel der Fig. 2 ist die RFID-Antenne 4 innen liegend an einem Schichtübergang der Folie zwischen einer Außenschicht 5 und einer Innenschicht 6 angeordnet. Während die Innenschicht 6 aus einem gut siegelbaren Material, beispielsweise PE gebildet ist, verleiht die Außenschicht 5 dem Folienverpackungsbeutel 3 ein hochwertiges Aussehen. Als Außenschicht kann beispielsweise PET vorgesehen sein, wobei dann bei einem solchen PET/PE-Verbund üblicherweise die aus PET bestehende Außenschicht 5 bedruckt ist. Durch die innen liegende Anordnung der RFID-Antenne 4 ist dieser optimal gegen Beschädigungen geschützt. In der Fig. 2 ist angedeutet, dass neben der RFID-Antenne 4 auch ein üblicher Aufdruck zwischen der Außenschicht 5 und der Innenschicht 6 vorhanden ist.

Die RFID-Anordnung 2 weist des Weiteren einen RFID-Chip 7 und ein Anpassnetzwerk 8 auf. Da die RFID-Antenne 4 innen liegend in der Folie 1 angeordnet ist, kann der RFID-Chip 7 nicht direkt elektrisch leitend mit der RFID-Antenne 4 kontaktiert werden. Gemäß dem Ausführungsbeispiel erfolgt die Ankopplung des RFID-Chips 7 an die RFID-Antenne 4 kapazitiv über das Anpassnetzwerk 8, welches zusammen mit der Antenne 4 im Detail in der Fig. 2 dargestellt ist. Der RFID-Chip sowie das mit diesem Chip 7 direkt kontaktierte Anpassnetzwerk 8 sind mit einem Trägerabschnitt 9 in Form einer Etikettenfolie im Bereich der Antenne 4 auf die Folie 1 aufgebracht und mit einem Klebstoff 10 des Trägerabschnittes 9 befestigt.

Die RFID-Antenne 4 weist die Form von zwei sich kreuzenden Dipolen auf. Entsprechend ist auch das Anpassnetzwerk 8 mit vier gleich ausgebildeten Segmenten geformt. Ausgehend von einem mittigen Anschlussbereich 11, an dem der in der Fig. 3 lediglich angedeutete RFID-Chip mit vier Anschlüssen direkt kontaktiert ist, weist das Anpassnetzwerk 8 sich zunächst nach außen erstreckende und dann teilende Leiterbahnen 12 auf. Die Leiterbahnen 12 von benachbarten Segmenten kommen dann in verbreiterten leitenden Flächen 13 zusammen.

Das beschriebene Anpassnetzwerk 8 ist nach Art eines LC-Schwingkreises ausgebildet, um eine Impedanzanpassung zwischen RFID-Chip 7 und RFID-Antenne 4 derart zu bewirken, dass Übertragungsverluste minimiert bzw. die Abstrahlung und Empfindlichkeit der RFID-Anordnung (2) maximiert werden. und auf die Signalfrequenz des RFID-Chips 7 sowie der RFID-Antenne 4 angepasst. Die kapazitive Kopplung an die RFID-Antenne 4 erfolgt im Wesentlichen an den leitenden Flächen 13, wobei diese leitenden Flächen 13 in einem Ersatzschaltbild Teile eines Kondensators und die vorgelagerten Leiterbahnen 12 die Induktivität bestimmende Spulen darstellen.

Die gemäß der Fig. 2 durch den Trägerabschnitt 9 in Form einer Etikettenfolie und durch die Außenschicht 5 von dem Anpassnetzwerk 8 getrennte RFID-Antenne 4 weist gemäß dem Ausführungsbeispiel der Fig. 3 vier gleich ausgebildete Segmente 14 auf. Die Dicke und die Dielektrizität der Außenschicht 5 sowie des Trägerabschnittes 9 ist bei der Kopplung zwischen Anpassnetzwerk 8 und RFID-Antenne 4 zu berücksichtigen.

Die Segmente 14 sind in einer Winkelteilung von 90° angeordnet und erstrecken sich ausgehend von einem mittleren Kopplungsbereich nach außen. Die Segmente 14 sind jeweils bezüglich einer sich von dem Kopplungsbereich nach außen erstreckenden Segmentlängsachse 15 spiegelsymmetrisch ausgebildet, wobei die Segmente 14 jeweils entlang ihrer Segmentlängsachse 15 zwei aufeinander folgende freie Flächen 16a, 16b aufweisen, die rahmenförmig von leitendem Material umgeben sind und zwischen denen eine Einschnürung 22 vorgesehen ist. Die einzelnen Segmente 14 haben ein im Wesentlichen T-förmiges anschließendes Endstück 17, wobei die T-förmigen Endstücke 17 um den Umfang eine gleichmäßige achteckige Kontur bilden.

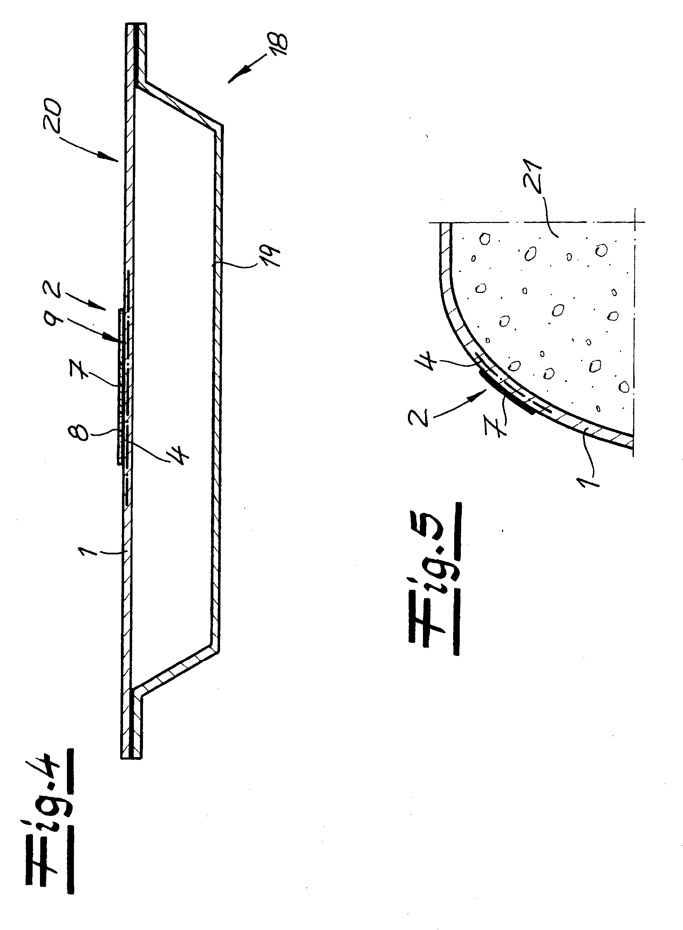

Während die Fig. 1 einen Körper in Form eines Verpackungsbeutels 3 zeigt, ist in der Fig. 4 eine alternative Ausgestaltung einer Verpackung in Form einer Tiefziehverpackung 18 dargestellt. Die Tiefziehverpackung 18 weist in üblicher Weise eine tiefgezogene Mulde 19 sowie einen Deckel 20 auf. Exemplarisch ist die RFID-Anordnung 2 in dem Deckel vorgesehen, wobei der Aufbau im Wesentlichen wie zuvor beschrieben ausgeführt sein kann. Auch hier ist die RFID-Antenne 4 direkt auf eine Schicht der Folie 1 aufgedruckt, während das Anpassnetzwerk 8 und der RFID-Chip 7 mit einem separaten Trägerabschnitt 9 nachträglich aufgebracht sind.

Schließlich zeigt die Fig. 5 einen Formkörper, wobei die eine Außenlage bildende Folie 1 mit Polymermaterial 21 hinterspritzt oder hinterschäumt ist. Die RFID-Anordnung 2 ist wie zuvor beschrieben ausgestaltet.

## Patentansprüche

1. Körper in Form einer Verpackung oder eines Formteils mit einer Außenlage aus Folie (1), an der eine RFID-Anordnung (2) vorgesehen ist, wobei eine Antenne (4) der RFID-Anordnung (2) unmittelbar auf eine Schicht der Folie (1) aufgedruckt ist, wobei ein RFID-Chip (7) der RFID-Anordnung (2) auf einem Trägerabschnitt (9) angeordnet ist, wobei der Trägerabschnitt (9) mit dem RFID-Chip (7) im Bereich der RFID-Antenne (4) auf die Folie (1) aufgesetzt ist, wobei der RFID-Chip (7) an ein auf dem Trägerabschnitt (9) angeordnetes Anpassnetzwerk (8) angeschlossen ist und wobei der RFID-Chip (7) über das Anpassnetzwerk (8) berührungslos, vorzugsweise kapazitiv, an die Antenne (4) angekoppelt ist, **dadurch gekennzeichnet, dass** die Folie (1) mehrschichtig laminiert ist, wobei die Antenne (4) an einem innen liegenden Schichtübergang der Folie (1) angeordnet ist.

2. Körper nach Anspruch 1, **dadurch gekennzeichnet, dass** das Anpassnetzwerk (8) als LC-Schwingkreis ausgebildet ist.

3. Körper nach Anspruch 1 oder 2, **dadurch gekennzeichnet, dass** die Folie (1) eine außen liegende Schicht aufweist, die heißsiegelbar ist.

4. Körper nach einem der Ansprüche 1 bis 3, **dadurch gekennzeichnet, dass** die von dem Außenumfang der Antenne (4) abgedeckte Fläche weniger als 10 % der Gesamtfläche der Folie (1) beträgt.

5. Körper nach einem der Ansprüche 1 bis 4, **dadurch gekennzeichnet, dass** der Trägerabschnitt (9) als Klebeetikett ausgebildet ist.

6. Körper nach einem der Ansprüche 1 bis 5, **dadurch gekennzeichnet, dass** die Antenne (4) in einem Tiefdruckprozess mit einer leitfähigen Druckfarbe gedruckt ist.

7. Körper nach einem der Ansprüche 1 bis 6, **dadurch gekennzeichnet, dass** dieser als Verpackungsbeutel (3) aus der Folie (1) geformt ist.

8. Körper nach einem der Ansprüche 1 bis 6, **dadurch gekennzeichnet, dass** dieser als Tiefziehverpackung (18) geformt ist, wobei die Folie (1) eine tiefgezogene Mulde (19) oder einen abziehbaren Deckel (20) bildet.

9. Körper nach einem der Ansprüche 1 bis 6, **dadurch gekennzeichnet, dass** dieser als Formkörper ausgebildet ist, wobei die eine Außenlage bildende Folie (1) hinterspritzt oder hinterschäumt ist.

10. Körper nach einem der Ansprüche 1 bis 9, **dadurch gekennzeichnet, dass** die Antenne eine Struktur mit zwei sich kreuzenden Dipolanordnungen aufweist, wobei der RFID-Chip zur Kopplung an die Antenne vier Anschlüsse aufweist.

11. Körper nach einem der Ansprüche 1 bis 10, **dadurch gekennzeichnet, dass** die RFID-Antenne (4) vier gleich ausgebildete Segmente (14) aufweist, die in einer Winkelteilung von 90° angeordnet sind und sich von einem mittleren Kopplungsbereich nach außen erstrecken, wobei die Segmente (14) jeweils bezüglich einer sich von dem Kopplungsbereich nach außen erstreckenden Segmentlängsachse (15) spiegelsymmetrisch ausgebildet sind und wobei die Segmente (14) jeweils entlang ihrer Segmentlängsachse (15) zumindest eine freie Fläche (16a, 16b) aufweisen, die rahmenförmig von leitendem Material umgeben ist.

12. Körper nach Anspruch 11, **dadurch gekennzeichnet, dass** die Segmente (14) jeweils zumindest zwei aufeinander folgende freie Flächen (16a, 16b) aufweisen, die rahmenförmig von leitendem Material umgeben sind und zwischen denen eine Einschnürung (22) vorgesehen ist.

## Claims

1. A body in the form of a pack or a moulded part with an outer layer from film (1), on which a RFID arrangement (2) is provided, wherein an antenna (4) of the RFID arrangement (2) is imprinted directly on a layer of the film (1), wherein a RFID chip (7) of the RFID arrangement (2) is arranged on a carrier portion (9), wherein the carrier portion (9) with the RFID chip (7) is fitted onto the film (1) in the area of the RFID antenna (4), wherein the RFID chip (7) is attached to a matching network (8) arranged on the carrier portion (9) and wherein the RFID chip (7) is coupled in a contactless manner, preferably capacitively, to the antenna (4) via the matching network (8), **characterised in that** the film (1) is laminated in several layers, wherein the antenna (4) is arranged at an inner layer transition of the film (1).

2. The body according to claim 1, **characterised in that** the matching network (8) is configured as a LC resonant circuit.

3. The body according to claim 1 or 2 **characterised in that** the film (1) comprises an external layer which is hot-sealable.

4. The body according to one of claims 1 to 3, **characterised in that** the surface covered by the external circumference of the antenna (4) is less than 10% of the total surface of the film (1).

5. The body according to one of claims 1 to 4, **characterised in that** the carrier portion (9) is configured as an adhesive label.

6. The body according to one of claims 1 to 5, **characterised in that** the antenna (4) is printed by intaglio printing with a conductive printing ink.

7. The body according to one of claims 1 to 6, **characterised in that** this is formed from the film (1) as a packaging bag (3).

8. The body according to one of claims 1 to 6, **characterised in that** this is formed as a deep-drawn package (18), wherein the film (1) forming the external layer forms a deep-drawn trough (19) or a pull-off lid (20).

9. The body according to one of claims 1 to 6, **characterised in that** it is configured as a moulding, wherein the film (1) forming an external layer is backmoulded or backfoamed.

10. The body according to one of claims 1 to 9, **characterised in that** the antenna comprises a structure with two intersecting dipole arrangements, wherein the RFID chip comprises four connections for coupling to the aerial.

11. The body according to one of claims 1 to 10, **characterised in that** the RFID antenna (4) comprises four identically shaped segments (14), which are arranged at angular divisions of 90° and extend outwards from a central coupling area, wherein the segments (14) are each formed mirror-symmetrically relative to a segment longitudinal axis (15) extending outwards from the coupling area, and wherein each of the segments (14) comprises at least one free surface (16a, 16b) along their segment longitudinal axis (15), which is surrounded like a frame by conductive material.

12. The body according to claim 11, **characterised in that** each of the segments (14) comprises at least two consecutive free surfaces (16a, 16b), which are surrounded like a frame by conductive material and between which a constriction (22) is arranged.

## Revendications

1. Corps sous forme d'un emballage ou d'une pièce formée avec une couche externe en feuille (1) sur laquelle un assemblage RFID (2) est prévu, une antenne (4) de l'assemblage RFID (2) étant directement imprimée sur une couche de la feuille (1), une puce RFID (7) de l'assemblage RFID (2) étant disposée sur un tronçon de support (9), le tronçon de support (9) avec la puce RFID (7) étant apposé sur la feuille (1) dans la zone de l'antenne RFID (4), la puce RFID (7) étant raccordée à un circuit d'adaptation (8) disposé sur le tronçon de support (9) et la puce RFID (7) étant couplée sans contact à l'antenne (4) via le circuit d'adaptation (8), de préférence de manière capacitive, **caractérisé en ce que** la feuille (1) est laminée en plusieurs couches, l'antenne (4) étant disposée à une transition de couches située à l'intérieur de la feuille (1).

2. Corps selon la revendication 1, **caractérisé en ce que** le circuit d'adaptation (8) est réalisé en tant que circuit oscillant LC.

3. Corps selon la revendication 1 ou 2, **caractérisé en ce que** la feuille (1) présente une couche située à l'extérieur, laquelle peut être scellée à chaud.

4. Corps selon l'une des revendications 1 à 3, **caractérisé en ce que** la surface recouverte par la périphérie extérieure de l'antenne (4) est de moins de 10% de la surface totale de la feuille (1).

5. Corps selon l'une des revendications 1 à 4, **caractérisé en ce que** le tronçon de support (9) est réalisé en tant qu'étiquette autocollante.

6. Corps selon l'une des revendications 1 à 5, **caractérisé en ce que** l'antenne (4) est imprimée avec une couleur d'impression conductrice lors d'un processus d'héliogravure.

7. Corps selon l'une des revendications 1 à 6, **caractérisé en ce que** celui-ci est formé en tant que sachet d'emballage (3) à partir de la feuille (1).

8. Corps selon l'une des revendications 1 à 6, **caractérisé en ce que** celui-ci est formé en tant qu'emballage d'emboutissage (18), la feuille (1) formant une cuvette (19) emboutie ou un couvercle (20) retirable.

9. Corps selon l'une des revendications 1 à 6, **caractérisé en ce que** celui-ci est réalisé en tant que corps formé, la feuille (1) formant une couche externe étant injectée sur le revers ou moussée sur le revers.

10. Corps selon l'une des revendications 1 à 9, **caractérisé en ce que** l'antenne présente une structure avec deux assemblages dipôles qui se croisent, la puce RFID présentant quatre bornes pour le couplage à l'antenne.

11. Corps selon l'une des revendications 1 à 10, **caractérisé en ce que** l'antenne RFID (4) présente quatre segments (14) réalisés de manière identique, lesquels sont disposés selon une répartition angulaire de 90° et s'étendent vers l'extérieur à partir d'une zone de couplage centrale, les segments (14) étant respectivement réalisés avec une symétrie spéculaire par rapport à un axe longitudinal de segment (15) s'étendant vers l'extérieur à partir de la zone de couplage et les segments (14) présentant respectivement, le long de leur axe longitudinal de segment (15), au moins une surface libre (16a, 16b), laquelle est entourée en forme de cadre par du matériau conducteur.

12. Corps selon la revendication 11, **caractérisé en ce que** les segments (14) présentent respectivement au moins deux surfaces libres (16a, 16b) successives, lesquelles sont entourées en forme de cadre par du matériau conducteur et entre lesquelles ont prévoit un rétrécissement (22).
